# EUROPEAN PATENT APPLICATION

(11) **EP 4 215 053 A1**
(43) Date of publication of application: **26.07.2023**
(21) Application number: 22153058.7
(22) Date of filing: 24.01.2022
(51) Int. Cl.: A23J 3/14, A23L 15/00, A23L 29/10, A23L 29/20, A23L 29/206, A23L 29/269

(54) **EGG SUBSTITUTE COMPRISING FABA BEAN PROTEIN ISOLATE**

(71) Applicant: Lovely Day Foods GmbH, 10119 Berlin (DE)
(72) Inventor: BOGUMIL, Tanja, 10245 Berlin (DE); BECKER, Bernd, 49733 Haren (DE)
(74) Representative: Richly & Ritschel Patentanwälte PartG mbB

(57) **Abstract**

Egg substitute compositions comprising faba bean protein and methods of manufacturing and using said compositions in the preparation of food products.

## Description

### FIELD OF THE INVENTION

The present invention is directed to egg substitute compositions and methods of manufacturing and using said compositions in the preparation of food products.

### BACKGROUND OF THE INVENTION

Eggs from chicken are one of the most widely consumed food products in the world.

Many attempts have been made to create an egg substitute that replaces the desired nutritional and culinary features of natural chicken eggs.

Eggs are a versatile source of protein, vitamins, iron amount other nutrients. In addition to its great nutritional value, eggs are also widely used and one of the essential ingredients in a variety of culinary applications, including savory and sweet baking and cooking or simply in the form of fried or scrambled eggs.

Many attempts have been made to create an egg substitute that replaces the desired nutritional and culinary features of natural eggs by only using vegetable sources. However, none of the prior attempts was successful at providing an egg substitute that when fried in a pan provides a food with the same properties like that of a fried egg.

Accordingly, there is still a need for an egg replacement that can replace a whole egg in all its culinary and nutritional features, and is of complete vegetable origin and can be considered to be vegan.

### SUMMARY

The invention is defined by the appended claims.

Disclosed is an egg substitute composition comprising
a. 8 - 16 % (w/w) of a protein isolate composition comprising faba bean protein isolate and pea protein isolate,
b. 8 - 16 % (w/w) of vegetable oil,
c. 0.5 - 2 % (w/w) of a thickener composition,
d. 0.1 - 1 % (w/w) of emulsifier,
e. 0.01-1 % (w/w) of acidity regulator, and
f. the remainder being water.

It was surprisingly found that a combination of faba bean protein isolate and pea protein isolate provides a structure and texture to the egg substitute composition that is very similar to the structure and texture of chicken egg, especially very similar to the structure and texture of chicken egg in the fried state.

The egg substitute composition can further comprise one or more colorants, especially carotenoids. The egg substitute composition can further comprise one or more flavoring agents, especially flavoring agents providing an egg flavor. The egg substitute composition can further comprise one or more salt, especially 0.1% to 2% (w/w), 0.2% to 1.5% (w/w), 0.5% to 1.1% (w/w), 0.6% to 1.0% (w/w), or 0.7% to 0.9% (w/w) salt, especially table salt (NaCl).

It was surprisingly found that salt provided at this concentration optimizes the gelling of the egg substitute and the timing of the gelling of the egg substitute when being fried.

The faba bean protein isolate and pea protein isolate respectively can exhibit a pH of 6.0 to 7.0.

It was surprisingly found that protein isolates having the above-defined pH further improve the gelling properties and mouthfeel of the egg substitute when being fried.

The pH of the egg substitute composition can be 6.0 to 7.0.

It was surprisingly found that an egg substitute having the above-defined pH further improves the gelling properties and mouthfeel of the egg substitute when being fried and also improves the shelf-life of the egg substitute.

The thickener composition can comprise at least two different thickeners, wherein the at least two different thickeners are capable of providing at least two different viscosities at room temperature in a solution when tested under the same conditions.

It was found that using two different thickeners further improves the gelling properties of the egg substitute. The desired viscosity can be suitably adapted.

The at least two different thickeners can be high acyl gellan and low acyl gellan.

It was found that using high acyl gellan and low acyl gellan further improves the gelling properties of the egg substitute.

In the egg substitute composition, the faba bean protein isolate can provide 0.5 - 2 % (w/w) of the egg substitute composition and/or the pea protein isolate can provide 8-14 % (w/w) of the egg substitute composition.

It has been found that those ranges optimize the properties of the egg substitute with respect to the texture and mouthfeel of the egg substitute.

The emulsifier can be lecithin.

The acidity regulator can be sodium citrate. The water can be regular tap water, i.e. water that contains ions.

It was found that acidity regulators like sodium citrate improve the performance of the thickening agents.

Also disclosed is a food product comprising the egg substitute composition as described above.

Also disclosed is a method for providing an egg substitute composition comprising in sequence the following steps:
a. Dissolve an acidity regulator in water to provide a solution A
b. Dissolve a first thickener in solution A
c. Dissolve a second thickener in water to provide solution B
d. Dissolve a protein isolate composition in solution B
e. Mix solution A with solution B to provide a solution C
f. Dissolve a composition comprising vegetable oil and emulsifier in solution C
g. Dissolve salt in the solution
h. Heating solution C to a temperature of 70-75 °C and then by cooling the temperature of solution C to a desired temperature providing the egg substitute composition.

In the above method, both thickeners are dissolved separately from each other.

It was found that adding those thickeners improves the gelling of the egg substitute when being heated. In this way gelling only occurs when the egg substitute is exposed to heat and not already during manufacture of the egg substitute.

The method can comprise in sequence the following steps:
a. Dissolve an acidity regulator in 25-35 % (w/w) of the water contained in the final egg substitute composition to provide a solution A (at 100 - 700 rpm, 0.5 - 5 min)
b. Dissolve a first thickener in solution A (at 100 - 700 rpm, 0.5 - 5 min), especially low acyl gellan
c. Dissolve a second thickener in 65-75 % (w/w) of the water contained in the final egg substitute composition to provide solution B (at 100 - 700 rpm, 0.5 - 5 min), the preferred second thickener being high acyl gellan
d. Dissolve a protein isolate composition in solution B (at 100 - 700 rpm, 0.5 - 5 min)
e. Mix solution A with solution B to provide a solution C (at 100 - 700 rpm, 0.5 - 5 min)
f. Dissolve a composition comprising vegetable oil and emulsifier in solution C (at 1000 - 2000 rpm, 2 - 8 min)
g. Heating solution C to a temperature of 75 °C and then by cooling the temperature of solution C to a desired temperature providing the egg substitute composition.

The second thickener can be capable of providing a higher viscosity in a solution than the first thickener at room temperature when tested under the same conditions.

The method may further comprise a step f'. between step f. and step g., said step f'. comprising: adding one or more colorants or/and one or more flavoring agents.

It is also disclosed that in the method as described above, the egg substitute composition is the composition as described above.

It is also disclosed that the egg substitute composition as described above is obtainable by the method as described above.

### DETAILED DESCRIPTION

### General

As used herein the term "about" refers to ±10%, ±5%, or ±1%.

The terms "comprises", "comprising", "includes", "including", "having" and their conjugates mean "including but not limited to".

The term "consisting of means "including and limited to".

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided In some embodiments, and not provided in other embodiments". Any particular embodiment of the invention may include a plurality of "optional" features unless such features conflict.

As used herein, the singular form "a", "an" and "the" include plural references unless the context clearly dictates otherwise. For example, the term "a compound" or "at least one compound" may include a plurality of compounds, including mixtures thereof.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

### Protein isolate composition

The egg substitute comprises 8 - 16 % (w/w) of a protein isolate composition comprising faba bean protein isolate and pea protein isolate.

In some embodiments the egg substitute comprises 8.5-15 % (w/w), 9-14 % (w/w), 9-13 % (w/w), 9-12 % (w/w), 9.5-10.5 (w/w), 10.5-11.5 % (w/w), or 11.5-12.5 % (w/w) of a protein isolate composition. Preferred are 9.5-10.5 % (w/w) of a protein isolate composition. Also preferred are 11.5-12.5 (w/w) of a protein isolate composition.

The faba bean protein isolate and pea protein isolate used for the protein isolate composition are preferentially powders. The faba bean protein isolate and pea protein isolate used for the protein isolate composition are preferentially freeze-dried powders. The faba bean protein isolate and pea protein isolate used for the protein isolate composition preferentially have a D90 particle size of less than 20 microns, preferably less than 15 microns, even more preferably less than 10 microns. The faba bean protein isolate and pea protein isolate used for the protein isolate composition are preferentially debittered to avoid unpleasant flavor.

The faba bean protein isolate and pea protein isolate used for the protein isolate composition preferentially have a degree of hydrolysis of less than 15%, less than 12%, or less than 10%. A degree of hydrolysis as defined above ensures a high solubility of the protein in water. The degree of hydrolysis is determined according to the method defined in US2022007678A1 at paragraphs 69-86.

The Faba bean protein isolate can comprise at least 58 (w/w), 58 % (w/w) - 80 % (w/w), 58 % (w/w) - 70 % (w/w), or 59 % (w/w) - 61 % (w/w) of protein. The Faba bean protein isolate has preferentially no color (is translucent in solution) or yellow.

The pea protein bean isolate can comprise at least 82% (w/w), 82 % (w/w) - 95 % (w/w), 84 % (w/w) - 90 % (w/w), or 84 % (w/w) - 87 % (w/w) of protein. The pea protein isolate has preferentially a yellow color.

The pH of the faba bean protein isolate and pea protein isolate or any other protein isolate described herein is determined by dissolving 10 % (w/w) of the isolate in distilled water, agitating the solution until dissolution of the protein, and then determining the pH.

In some embodiments, the faba bean protein isolate and pea protein isolate described herein, have a pH in a range of about 5-7. In some embodiments, the faba bean protein isolate and pea protein isolate described herein, have a pH in a range of about 5.5-7. In some embodiments, the faba bean protein isolate and pea protein isolate described herein, have a pH in a range of about 6.0-7.0. In some embodiments, the faba bean protein isolate and pea protein isolate described herein, have a pH in a range of about 6.1-6.9. In some embodiments, the faba bean protein isolate and pea protein isolate described herein, have a pH in a range of about 6.2-6.8. In some embodiments, the faba bean protein isolate and pea protein isolate described herein, have a pH of about 6.3, 6.4, 6.5, 6.6, or 6.7.

The faba bean protein isolate can provide 0.5 - 2 % (w/w), 1.0 - 1.5 (w/w), or 1.1-1.3 (w/w) of the egg substitute composition and the pea protein isolate provides 8-14 % (w/w), 9-12 % (w/w), or 10-11.5 % (w/w) of the egg substitute composition.

### pH-range of the egg substitute

In some embodiments, the compositions described herein, have a pH in a range of about 5-7. In some embodiments, the compositions described herein, have a pH in a range of about 5.5-7. In some embodiments, the compositions described herein, have a pH in a range of about 6.0-7.0. In some embodiments, the compositions described herein, have a pH in a range of about 6.1-6.9. In some embodiments, the compositions described herein, have a pH in a range of about 6.2-6.8. In some embodiments, the compositions described herein, have a pH of about 6.3, 6.4, 6.5, 6.6, or 6.7.

### Colorants/Coloring Agents

In some embodiments, the composition comprises one or more coloring agents. Various natural or artificial coloring agents are known to those skilled in the art, and can include, for example, paprika oil, carrot concentrate, in particular, caretonoids such as beta-carotene, turmeric, annatto, vanilla yellow, mango yellow. Preferred is a vanilla yellow.

In some embodiments, the composition comprises 0.1% to 2% (w/w), 0.2% to 1.5% (w/w), 0.3% to 1% (w/w), 0.3% to 0.5% (w/w) coloring agent.

Generally, the egg substitute composition can be used to replace a total egg, egg yolk or egg white. Depending on the desired use, appropriate colorants can be added or not added to the composition.

### Flavoring Agents

In some embodiments, the composition comprises one or more flavoring agents. In some embodiments, the composition comprises yeast, sugar, and any combination thereof. Various natural or artificial flavoring agents are known to those skilled in the art, and can include, for example, spices, sugar, sweeteners, monosodium glutamate, sulfuric flavoring agents such as black (rock) salt, or other flavoring agents. Preferred is black rock salt. Preferred are flavoring agents which are found in chicken eggs. Thus, preferred are flavoring agents which are chemically identical to flavoring agents found in chicken eggs but obtained from a non-animal origin, i.e. are of vegetable origin or produced by chemical syntheses or microbiological production In some embodiments, the composition comprises 0.1% to 2% (w/w), 0.2% to 1.5% (w/w), 0.3% to 1% (w/w), 0.3% to 0.7% (w/w), or 0.4% to 0.5% (w/w) flavoring agent.

### Salt

In some embodiments, the composition comprises 0.1% to 2% (w/w), 0.2% to 1.5% (w/w), 0.5% to 1.1% (w/w), 0.6% to 1.0% (w/w), or 0.7% to 0.9% (w/w) salt, especially table salt. The salt can be sodium chloride or potassium chloride. Preferred is sodium chloride.

### Emulsifier

In some embodiments, the composition further comprises an emulsifier from a vegetable source. In some embodiments, the emulsifier comprises lecithin, especially lecithin from a vegetable e.g sunflower lecithin or rapeseed. Alternatively, any emulsifier having an hydrophilic-lipophilic balance (HLB) value which is about +/- 10 % of the HLB value of lecithin may be used. In some embodiments, the composition comprises 0.1% to 2% (w/w), 0.05% to 1% (w/w), 0.1% to 0.8% (w/w), 0.1% to 0.7% (w/w), 0.1% to 0.6% (w/w), 0.1% to 0.4% (w/w), 0.1% to 0.3% (w/w), or 0.2% (w/w), of an emulsifier, especially lecithin.

### Thickener

In some embodiments, the composition comprises a thickener.

In some embodiments, the composition comprises 1% to 2% (w/w), 1.0% to 1.8% (w/w), 1.2% to 1.6% (w/w), or 1.4% (w/w), of a thickener.

Preferred is to use a combination of at least two different thickeners wherein the at least two different thickeners are capable of providing at least two different viscosities at room temperature in a solution when tested under the same conditions.

In some embodiments, the thickener comprises Gellan gum. As used herein, "Gellan gum" refers to the extracellular polysaccharide obtained by the aerobic fermentation of the microorganism Pseudomonas elodea in a suitable nutrient medium. Gellan gum refers to the various forms of native, deacetylated, deacetylated clarified, partially deacetylated, and partially deacetylated clarified.

Preferably the thickener comprises high acyl (HA) gellan and low acyl (LA) gellan. The low acyl gellan gum products form firm, non-elastic, brittle gels, whereas the high acyl gellan gum forms soft and elastic gels.

HA gellan gum has two acyl substituents acetate at C6 and glycerate at C2 on the first glucose unit of the repeating unit of tetrasaccharide, and on average, there is one glycerate per repeat and one acetate per every two repeats. LA gellan gum is partly deacylated or fully deacylated. Its preferred form is the fully deacylated one, with no detectable acyl groups, also called deacetylated gellan gum.

Preferably the composition comprises HA gellan gum and LA gellan gum in a ratio of 5:1 to 3:1, 4.5:1 to 3.5:1, 4.2:1 to 3.7:1, and 4.1:1 to 3.9: 1, or 4:1. The concentration of the total gellan gum is 1% to 2% (w/w), 1.0% to 1.8% (w/w), 1.2% to 1.6% (w/w), or 1.4% (w/w).

### Oil

The composition preferably comprises a vegetable oil. Preferably the oil is olive oil or rapeseed oil, especially rapeseed oil.

The composition can comprise 8-16 % (w/w), 8-15 % (w/w), 9-14 % (w/w), 10-13 % (w/w), or 11-12%(w/w) oil.

### Food product

In some embodiments, the present disclosure provides a food product comprising the compositions described herein. In some embodiments, the present invention provides a food product prepared using the compositions described herein. In some embodiments, the food product prepared with the compositions described herein, is indistinguishable from an equivalent food product prepared with eggs.

In some embodiments, the food product does not comprise any chicken egg or a portion thereof.

In some embodiments, the food product or/and the composition are vegan.

As used herein, the term "vegan" refers to properties of the components and indicates that the components are not sourced from or derived from an animal or animal product. As such, the components that are "vegan" are free of any animal products or animal byproducts.

The compositions and food products as described herein are suitable for a vegan diet and/or a vegetarian diet. For example, in embodiments in which the composition is suitable for a vegan diet, the composition may include primarily or exclusively plant-based components such that the composition contains substantially no animal products, animal byproducts, or substantially no components derived from these animal sources.

The food products comprising the egg substitute composition may be emulsions (e.g., mayonnaise and similar emulsions), baking mixes, cookies, muffins, cupcakes, brownies, cake, custard, pancakes, breads, waffles, pastries, pies, tarts, scones, pretzels, crackers scramble, omelet, quiche, pasta, sauce, dressing, scrambled eggs, or omelets,

### Container

Also disclosed are contains comprising the egg substitute composition.

The container can be made of a material selected from the group consisting of thin-walled film or plastic (transparent or opaque), paperboard-based, foil, rigid plastic, metal (e.g., aluminum), glass, etc.

The container may be suitable for maintaining sterility, e.g. be airtight.

The following examples illustrate the invention, but not limit the scope of the invention since the scope of the invention is defined by the claims.

### EXAMPLES

### EXAMPLE 1: EFFECT OF FABA BEAN CONCENTRATE

Tested compositions:

**Table 1**

| | Ingredients | | Example 1 | Reference example 1 |
|---|---|---|---|---|
| | | | %(w/w) | %(w/w) |
| (Total) water | Water | | 72.86 | 72.86 |
| Protein | Pea protein S86 Plus N (Rochette) | | 10.80 | 12 |
| | Faba Bean Protein Concentrate (PT01) (Beneo) | | 1.20 | 0 |
| Oil | Rapeseed oil | | 11.50 | 11.50 |
| Thickener | Gellan | | | |
| | | High acyl gellan | 1.12 | 1.12 |
| | | Low acyl gellan | 0.28 | 0.28 |
| Acidity regulator | Sodium citrate | | 0.30 | 0.30 |
| emulsifier | Lecithin | | 0.20 | 0.20 |
| salt | Sodium chloride | | 0.80 | 0.80 |
| Coloring agent | Carrot concentrate | | 0.44 | 0.44 |
| Flavoring agent | Egg aroma | | 0.50 | 0.50 |
| | Total | | 100.00 | 100.00 |

Manufacturing process:
To provide a total of 100 g of the egg substitute using the list of ingredients listed above the following process was used:

**Table 2**

| **Process step** | **Process step description** |
|---|---|
| Mixing A | Dissolve acidity regulator in (30% of the total) water by stirring |
| Dissolve A | Dissolve LA gellan in solution A by stirring |
| Mixing B | Dissolve protein in (70% of the total) water by stirring |
| Dissolve B | Dissolve HA gellan in solution A by stirring |
| Mixing C | Add solution A to solution B under agitation |
| Emulsification | Add oil and lecithin under agitation, add salt under agitation |
| Heating | Heating emulsified product for 10 minutes at 75°C under agitation |
| Cooling | Cooling of product to 20°C |

### Testing

Heating of product in frying pan until the product starts to boil is performed. Subsequently, visual inspection of the boiled/fried product by an expert grading the product with respect to the property at issue from 1 to 10 (1: not close to control example, 10: identical to control example) is performed.

### Results

**Table 3**

| Property | Example 1 | Reference example 1 | Control example (full chicken egg) |
|---|---|---|---|
| Melt behaviour | 8 | 7 | 10 |
| emulsification | 8 | 7 | 10 |
| Texture/mouth feel | 8 | 5 | 10 |

It was found that adding Faba Bean Protein to the product improved the texture and mouth feel of the egg substitute by providing structure to the fried product.

### EXAMPLE 2: EFFECT OF PH OF PROTEIN ISOLATE ON PROPERTIES OF EGG SUBSTITUTE PRODUCTS

Tested compositions:

**Table 4**

| | Ingredients | Example 1 | Referen ce example 2 | Referen ce example 3 | Referen ce example 4 | |
|---|---|---|---|---|---|---|
| | | %(w/w) | %(w/w) | %(w/w) | %(w/w) | |
| (Total) water | Water | 72.86 | 72.86 | | | |
| Protein | Pea protein S86 Plus N (Rochette), pH=6.75 | 10.80 | | | | |
| | Pea protein Empro E 86 (Emslandgroup), pH: 7.19 | | 10.80 | | | |
| | Pea Protein Radipure E8001G (DKSH), pH=7,09 | | | 10.80 | | |
| | Pea Protein Radipure S8001B (DKSH), pH=7,04 | | | | 10.80 | |
| | Faba Bean Protein Concentrate (PT01) (Beneo) | | 1.20 | 1.20 | 1.20 | 1.20 |
| Oil | Rapeseed oil | | 11.50 | 11.50 | | |
| Thicken er | Gellan | | | | | |
| | | High acyl gellan | 1.12 | 1.12 | 1.12 | 1.12 |
| | | Low acyl gellan | 0.28 | 0.28 | 0.28 | 0.28 |
| Acidity regulator | Sodium citrate | | 0.30 | 0.30 | 0.30 | 0.30 |
| emulsifi er | Lecithin | | 0.20 | 0.20 | 0.20 | 0.20 |
| salt | Sodium chloride | | 0.80 | 0.80 | 0.80 | 0.80 |
| Coloring agent | Carrot concentrate | | 0.44 | 0.44 | 0.44 | 0.44 |
| Flavorin g agent | Egg aroma | | 0.50 | 0.50 | 0.50 | 0.50 |
| | Total | | 100.00 | 100.00 | 100.00 | 100.00 |

### Manufacturing process

The manufacturing process was identical to the process of Example 1.

### Testing

Heating of product in frying pan until the product starts to boil is performed. Subsequently, visual inspection of the boiled/fried product by an expert grading the product with respect to the property at issue from 1 to 10 (1: not close to control example, 10: identical to control example) is performed.

### Results

**Table 5**

| Property | Example 1 | Reference example 2 | Reference example 3 | Reference example 4 | Control example (full chicken egg) |
|---|---|---|---|---|---|
| viscosity | 8 | 2 | 7 | 7 | 10 |
| emulsification | 8 | 6 | 3 | 3 | 10 |
| Texture/mouth feel | 8 | 2 | 2 | 2 | 10 |

It was found that a pH of below 7 of the protein isolates improved especially the emulsification process, the texture and the mouth feel of the product. Products using protein isolates having a pH of above 7 often were too hard (Reference example 2) or gave a fatty mouth feel (Reference examples 3 and 4).

This is surprising since chicken eggs usually exhibit a pH above 7.

A further positive effect of the low pH of the product was that the shelf life of the product was improved while at the same time the product had properties very similar to chicken egg.

### EXAMPLE 3: EFFECT OF GELLAN ON EGG SUBSTITUTE

Tested compositions:

**Table 6**

| | Ingredients | | Example 1 | Example 2 | Example 3 | Reference example 5 | Reference example 6 | |
|---|---|---|---|---|---|---|---|---|
| | | | %(w/w) | %(w/w) | %(w/w) | %(w/w) | %(w/w) | |
| (Total) water | Water | | 72.86 | 72.86 | 72.86 | 72.86 | 72.86 | |
| | Pea protein S (Rochette) 86 Plus N | | 10.80 | 12 | 12 | 12 | 12 | |
| Protein | Faba Bean Pr Concentrate ( (Beneo) otein PT01) | | 1.20 | 0 | 0 | 0 | 0 | |
| Oil | Rapeseed oil | | 11.50 | 11.50 | 11.50 | 11.50 | 11.50 | |
| Thickener | Gellan | | 1.4 | | | | | |
| | | High acyl gellan: low acyl gelan | 4:1 | 5:1 | 3:1 | 2:1 | 7:1 | |
| Acidity regulator | Sodium citrate | | 0.30 | 0.30 | 0.30 | 0.30 | 0.30 | |
| emulsifier | Lecithin | | 0.20 | 0.20 | 0.20 | 0.20 | 0.20 | |
| Salt | Sodium chloride | | 0.80 | 0.80 | 0.80 | 0.80 | 0.80 | |
| Coloring agent | Carrot concentrate | 0.44 | 0.44 | 0.44 | 0.44 | 0.44 | | |
| Flavoring agent | Egg aroma | 0.50 | 0.50 | 0.50 | 0.50 | 0.50 | | |
| | Total | 100.00 | 100.00 | 100.00 | 100.00 | 100.00 | | |

Manufacturing process:
The manufacturing process was identical to the process of Example 1.

### Testing

Heating of product in frying pan until product starts to boil. Subsequently visual inspection of the boiled/fried product by expert grading the product with respect to the property from 1 to 10 (1: not close to control example, 10: identical to control example).

### Results

**Table 7**

| Properties | Example 1 | Example 2 | Example 3 | Reference example 5 | Reference example 6 | Control example (full chicken egg) |
|---|---|---|---|---|---|---|
| viscosity | 8 | 8 | 8 | 7 | 7 | 10 |
| gelation | 8 | 8 | 8 | 6 | 5 | 10 |
| Texture/mouth feel | 8 | 8 | 8 | 5 | 6 | 10 |

It was observed that a ratio of High acyl gellan: low acyl gellan in a ratio of 5:1 to 3:1 provided optimal results with respect to gelation and texture/mouth feel.

### EXAMPLE 4: EFFECT OF ADDING GELLAN AT DIFFERENT STEPS OF MANUFACTURING PROCESS

It was also observed (data not shown) that the respective gellans have to be first dissolved in separate aqueous solution respectively before they can be mixed together to provide the thickener system of the egg substitute product. Otherwise, the gelation process during frying of the egg substitute was not optimal.

Furthermore, it was observed that the gelation process is better when HA gellan is added to the aqueous protein solution and LA gellan to the aqueous acidity regulator solution.

## Claims

1. Egg substitute composition comprising
a. 8 - 16 % (w/w) of a protein isolate composition comprising faba bean protein isolate and pea protein isolate,
b. 8 - 16 % (w/w) of vegetable oil,
c. 0.5 - 2 % (w/w) of a thickener composition,
d. 0.1 - 1 % (w/w) of emulsifier,
e. 0.01-1 % (w/w) of acidity regulator, and
f. the remainder being water.

2. The egg substitute composition according to claim 1, further comprising one or more colorants or/and one or more flavoring agents or/and salt.

3. The egg substitute composition according to claims 1 or 2, wherein the faba bean protein isolate and pea protein isolate respectively exhibit a pH of 6.0 to 7.0.

4. The egg substitute composition according to any of the preceding claims, wherein the pH of the egg substitute composition is 6.0 to 7.0.

5. The egg substitute composition according to any of the preceding claims, wherein the thickener composition comprises at least two different thickeners, wherein the at least two different thickeners are capable of providing at least two different viscosities at room temperature in a solution when tested under the same conditions.

6. The egg substitute composition according to claim 5, wherein the at least two different thickeners are high acyl gellan and low acyl gellan.

7. The egg substitute composition according to any of the preceding claims, wherein the faba bean protein isolate provides 0.5 - 2 % (w/w) of the egg substitute composition and/or the pea protein isolate provides 8-14 % (w/w) of the egg substitute composition.

8. The egg substitute composition according to any of the preceding claims, wherein the emulsifier is lecithin.

9. The egg substitute composition according to any of the preceding claims, wherein the acidity regulator is sodium citrate.

10. A food product comprising the egg substitute composition according to any of the preceding claims.

11. Method for providing an egg substitute composition comprising the steps in the following order:
a. Dissolve an acidity regulator in water to provide a solution A
b. Dissolve a first thickener in solution A
c. Dissolve a second thickener in water to provide solution B
d. Dissolve a protein isolate composition in solution B
e. Mix solution A with solution B to provide a solution C
f. Dissolve a composition comprising vegetable oil and emulsifier in solution C
g. Dissolve salt in solution C
h. Heating solution C to a temperature of 75 °C and then by cooling the temperature of solution C to a desired temperature providing the egg substitute composition.

12. The method of claim 11, wherein the second thickener is capable of providing a higher viscosity in a solution than the first thickener at room temperature when tested under the same conditions.

13. The method of any of claims 11 or 12, further comprising a step f'. between step f. and step g., said step f'. comprising: adding one or more colorants or/and one or more flavoring agents.

14. The method of any of claims 11 - 13, wherein the egg substitute composition is the composition of any of claims 1-10.

15. The egg substitute composition according to any of claims 1-10 obtainable by the method of any of claims 11-13.
